(19) **Europäisches Patentamt**
**European Patent Office**
**Office européen des brevets**

(11) **EP 4 232 335 B1**

(12) **FASCICULE DE BREVET EUROPEEN**

(45) Date de publication et mention de la délivrance du brevet:
**30.10.2024 Bulletin 2024/44**

(21) Numéro de dépôt: **21793979.2**

(22) Date de dépôt: **21.09.2021**

(51) Classification Internationale des Brevets (IPC):
**B60W 40/10** *(2012.01)*

(52) Classification Coopérative des Brevets (CPC):
**B60W 40/10;** B60W 2520/105; B60W 2720/10

(86) Numéro de dépôt international:
**PCT/FR2021/051606**

(87) Numéro de publication internationale:
**WO 2022/084598 (28.04.2022 Gazette 2022/17)**

(54) **PROCÉDÉ ET DISPOSITIF DE DÉTERMINATION D'UN TEMPS DE MANOEUVRE D'UN VÉHICULE AUTONOME POUR ATTEINDRE UNE VITESSE CIBLE**

VERFAHREN UND VORRICHTUNG ZUM BESTIMMEN EINES BETRIEBSZEIT FÜR EIN AUTONOMES FAHRZEUG ZUR ERREICHUNG EINER ZIELGESCHWINDIGKEIT

METHOD AND DEVICE FOR DETERMINING AN OPERATING TIME FOR AN AUTONOMOUS VEHICLE TO REACH A TARGET SPEED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2020 FR 2010817**

(43) Date de publication de la demande:
**30.08.2023 Bulletin 2023/35**

(73) Titulaire: **Stellantis Auto SAS**
**78300 Poissy (FR)**

(72) Inventeurs:
• **VIVET, Luc**
**75016 PARIS 16 (FR)**
• **TOUIL, Lhassane**
**Kenitra, 14000 (MA)**
• **DE FRESCHEVILLE, Ghislain**
**78120 RAMBOUILLET (FR)**
• **KOUBACHI, Mouad**
**MELLAL, 23000 (MA)**

(56) Documents cités:
| | |
|---|---|
| EP-A2- 2 591 967 | EP-A2- 3 147 169 |
| DE-A1- 102012 213 321 | US-A1- 2015 134 225 |

**Description**

L'invention est dans le domaine des systèmes d'aide à la conduite de véhicule autonome. En particulier, l'invention concerne un procédé et un dispositif de détermination d'un temps de manoeuvre d'un véhicule autonome pour atteindre une vitesse cible.

On entend par « véhicule » tout type de véhicule tel qu'un véhicule automobile, un cyclomoteur, une motocyclette, un robot de stockage dans un entrepôt, etc. On entend par « conduite autonome » d'un « véhicule autonome » tout procédé apte à assister la conduite du véhicule. Le procédé peut ainsi consister à diriger partiellement ou totalement le véhicule ou à apporter tout type d'aide à une personne physique conduisant le véhicule. Le procédé couvre ainsi toute conduite autonome, du niveau 0 au niveau 5 dans le barème de l'OICA, pour Organisation International des Constructeurs Automobiles.

On entend par « accélération », l'accélération longitudinale du véhicule c'est-à-dire une différence de vitesse dudit véhicule entre deux instants donnés divisée par la durée entre ces deux instants. L'accélération peut être positive ou négative. Dans ce dernier cas, l'accélération est synonyme de décélération.

Un sélecteur de modes de conduite est présent sur certains véhicules : par exemple, dans un cas limitatif de 3 modes différents, un conducteur du véhicule sélectionne un mode sportif, un mode normal ou un mode économique. Suivant la sélection du mode de conduite, des systèmes d'aides à la conduite sont aptes à typer le mode de conduite du véhicule par un pilotage d'actionneurs (couple moteur, freinage, suspensions ...). Ces systèmes d'aide à la conduite agissent sur la dynamique longitudinale du véhicule, et donc sur la position, la vitesse, l'accélération et le jerk du véhicule.

Le véhicule circulant, ces systèmes d'aide à la conduite doivent agir au bon moment en fonction des évènements détectés. Par exemple, c'est le cas lors d'un besoin de changement de vitesse suite à une détection d'un panneau de limitation de vitesse. Chaque système d'aide à la conduite doit déterminer ce moment, et cela pour chaque mode de conduite. Il n'y a pas d'uniformisation de la détermination du temps de manoeuvre. Par ailleurs, classiquement, chaque fonction d'aide à la conduite qui participe au typage du mode conduite possède une loi de régulation par mode de conduite. La multiplication des modes de conduite entraine un temps de calibration long et complexe.

On connait par le document EP3147169A2 un procédé et un dispositif pour faire fonctionner un véhicule, qui permettent une meilleure conduite en roue libre du véhicule.

Un objet de la présente invention est de remédier au problème précité, en particulier de déterminer simplement, sans avoir besoin de nombreux ressources de calculs, le temps de manoeuvre pour atteindre une vitesse cible en fonction du mode de conduite.

A cet effet, un premier aspect de l'invention concerne un procédé de détermination d'un temps de manoeuvre d'un véhicule autonome pour atteindre une vitesse cible. Ledit procédé comporte les étapes de :

- Sélection d'un paramètre, $J_{max}$, représentant un jerk maximum que le véhicule ne doit pas dépasser en valeur absolue ;
- Acquisition d'une vitesse cible représentant une vitesse que doit atteindre le véhicule ;
- Acquisition d'une vitesse initiale du véhicule représentant une vitesse du véhicule à l'instant courant ;
- Détermination d'un temps de manoeuvre, $tm$, égale à

$$tm = \sqrt{k \frac{|DV|}{J_{max}}}$$

où $|DV|$ est la valeur absolue de la différence entre la vitesse cible et la vitesse initiale, et k est une constante prédéterminé.

Le jerk, la variation d'accélération du véhicule par unité de temps, est bien ressenti par des occupants du véhicule. Il est représentatif d'un mode de conduite. Un jerk proche de 1,5 m/s$^3$, respectivement 0,7 m/s$^3$ ou 0,3 m/s$^3$, représente un mode de conduite sportif, respectivement normal ou économique. Plus le jerk est grand plus l'à-coup du véhicule est ressenti par les occupants du véhicule. Le paramètre $J_{max}$ est déterminé, par exemple, à partir d'une sélection par un conducteur du mode de conduite souhaité (sportif, normal ou économique par exemple). Le temps de manoeuvre pour atteindre la vitesse cible à partir de la vitesse initiale est déterminée à partir de l'équation $\sqrt{k \frac{|DV|}{J_{max}}}$.

Il est simplement lié à l'inverse de la racine du paramètre $J_{max}$. Plus le paramètre $J_{max}$ est grand plus petit est le temps de manoeuvre. Si le véhicule accélère pour atteindre la vitesse cible en un temps de manoeuvre, $tm$, tel que déterminé, alors le jerk initial est égal au jerk maximum. Le conducteur ressent dès le début le jerk maximum. Le véhicule se comporte dès le début de la manoeuvre tel qu'attendu par le conducteur, le mode de conduite ayant été sélectionné initialement par le conducteur. Le paramètre k est une valeur numérique prédéterminée à partir d'une modélisation de la trajectoire de la vitesse du véhicule ou à partir d'au moins une simulations d'accélération ou de décélération du véhicule.

Ce temps de manoeuvre est un indicateur très simple et rapide à calculer. Il est déterminé une fois pour toute lorsqu'on connait la vitesse initiale et la vitesse cible que doit atteindre le véhicule.

Avantageusement, l'acquisition d'une vitesse cible représentant la vitesse que doit atteindre le véhicule est obtenue à l'aide d'une interface homme-machine.

Ainsi, différents moyens peuvent être utilisées pour renseigner simplement et ergonomiquement la vitesse désirée par le conducteur ou un passager du véhicule. Cela peut être réalisé par un bouton, une molette, un bouton à incréments (+/-), par un clavier, par une interface écran tactile, par une reconnaissance vocale ...

Avantageusement, l'acquisition d'une vitesse cible représentant la vitesse que doit atteindre le véhicule est obtenue à l'aide d'un dispositif de géolocalisation associé à une cartographie.

La vitesse conseillée est obtenue sans action du conducteur ou d'un passager. Certaines cartographies comprennent une représentation schématique des axes routiers avec des informations de signalisation routière attachées à des tronçons de route comme par exemple les limitations de vitesses.

Certaines cartographies comprennent également la courbure la route. Des systèmes d'aide à la conduite sont alors aptes à déterminer une vitesse conseillée, selon le mode de conduite souhaité, en fonction de de la courbure de la route.

Avantageusement, l'acquisition d'une vitesse cible représentant la vitesse que doit atteindre le véhicule est obtenue à l'aide d'un dispositif de reconnaissance de panneau.

La vitesse conseillée est obtenue sans action du conducteur ou d'un passager. Il est connu que des véhicules comportent des organes aptes à détecter des panneaux de signalisation présents sur la voie de circulation sur la quelle circule le véhicule. Certains de ces dispositifs de détection de panneaux de signalisation sont également aptes à reconnaître la vitesse maximum de circulation autorisée, et sont aptes à déterminer la distance entre le véhicule et le panneau détecté.

Avantageusement, le procédé comporte en outre une étape d'activation d'une fonction d'assistance de conduite en fonction du temps de manoeuvre déterminé. Avantageusement, la fonction d'assistance de conduite est un affichage de la vitesse cible au conducteur.

Avantageusement, la fonction d'assistance de conduite est un régulateur de vitesse. Lors d'une acquisition d'une nouvelle vitesse cible, par exemple une nouvelle limitation de vitesse, avec la connaissance de la distance avant cette limitation de vitesse, avec la connaissance de la vitesse actuelle, le procédé est apte à déterminer l'instant (ou la position, l'une et l'autre étant reliées par la vitesse du véhicule) où il est nécessaire d'activer une fonction d'aide à la conduite tout en respectant le jerk maximum souhaitée (par exemple activation d'une régulation de vitesse véhicule afin d'atteindre la vitesse conseillée avec le jerk maximum désiré). Afin de respecter le jerk maximum souhaitée le temps de manoeuvre est correspond à une accélération constante de la vitesse comme le fait un conducteur.

Ainsi, l'affichage de nouvelle vitesse limite est réalisée au bon moment et de manière pragmatique. Par exemple, si la nouvelle acquisition de vitesse est égale à la vitesse initiale du véhicule, pour des raisons d'ergonomie, il n'y pas besoin de rappeler plusieurs dizaines de secondes ou minutes à l'avance la présence de la nouvelle limitation de vitesse. Inversement, si la nouvelle limitation de vitesse est différente, elle sera affichée au bon moment, soit au temps de manoeuvre déterminé.

L'affichage est proposé au conducteur plus tôt si on attend une réaction spécifique du conducteur (par exemple un validation), le moment de l'affichage est alors le temps de manoeuvre plus un temps de réaction du conducteur.

Si le véhicule est équipé d'un régulateur de vitesse, dans le cas d'une acquisition d'une nouvelle vitesse cible qui est différente de celle de la vitesse initiale, cette vitesse cible est pris en compte par le régulateur de vitesse également au bon moment correspondant au temps de manoeuvre calculé avec ou non un temps correspondant à une marge d'erreur ou une volonté d'atteindre l vitesse cible quelques instants avant le besoin.

Un deuxième aspect de l'invention concerne un dispositif comprenant une mémoire associée à au moins un processeur configuré pour mettre en oeuvre le procédé selon le premier aspect de l'invention.

L'invention concerne aussi un véhicule comportant le dispositif.

L'invention concerne aussi un programme d'ordinateur comprenant des instructions adaptées pour l'exécution des étapes du procédé, selon le premier aspect de l'invention, lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :

[Fig. 1] illustre schématiquement un dispositif, selon un exemple particulier de réalisation de la présente invention.
[Fig. 2] illustre schématiquement un procédé de détermination d'un temps de manoeuvre d'un véhicule autonome pour atteindre une vitesse cible, selon un exemple particulier de réalisation de la présente invention.

L'invention est décrite ci-après dans son application, non limitative, au cas d'un véhicule automobile autonome circulant sur une route ou sur une voie de circulation. D'autres applications telles qu'un robot dans un entrepôt de stockage ou encore une motocyclette sur une route de campagne sont également envisageables.

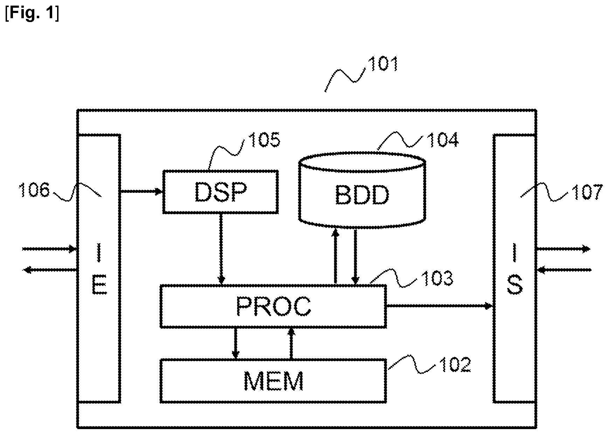

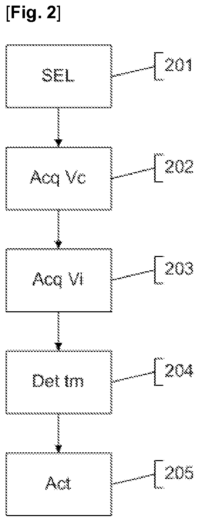

La figure 1 représente un exemple de dispositif 101 compris dans le véhicule, dans un réseau (« cloud ») ou dans un serveur. Ce dispositif 101 peut être utilisé en tant que dispositif centralisé en charge d'au moins certaines étapes du procédé décrit ci-après en référence à la figure 2. Dans un mode de réalisation, il correspond à un calculateur de conduite autonome.

Dans la présente invention, le dispositif 101 est compris dans le véhicule.

Ce dispositif 101 peut prendre la forme d'un boitier comprenant des circuits imprimés, de tout type d'ordinateur ou encore d'un téléphone mobile (« smartphone »).

Le dispositif 101 comprend une mémoire vive 102 pour stocker des instructions pour la mise en oeuvre par un processeur 103 d'au moins une étape du procédé tel que décrit ci-avant. Le dispositif comporte aussi une mémoire de masse 104 pour le stockage de données destinées à être conservées après la mise en oeuvre du procédé.

Le dispositif 101 peut en outre comporter un processeur de signal numérique (DSP) 105. Ce DSP 105 reçoit des données pour mettre en forme, démoduler et amplifier, de façon connue en soi ces données.

Le dispositif 101 comporte également une interface d'entrée 106 pour la réception des données mises en oeuvre par le procédé selon l'invention et une interface de sortie 107 pour la transmission des données mises en oeuvre par le procédé selon l'invention.

La figure 2 illustre schématiquement un procédé de détermination d'un temps de manoeuvre d'un véhicule autonome pour atteindre une vitesse cible, selon un exemple particulier de réalisation de la présente invention.

Dans une étape 201, SEL, un paramètre, $J_{max}$, représentant un jerk maximum que le véhicule ne doit pas dépasser en valeur absolue est sélectionné. Dans un mode de réalisation, cette sélection est obtenue par la manipulation d'un conducteur du véhicule d'un sélecteur de modes de conduite présent sur le véhicule. Suivant le mode de conduite sélectionné, une valeur est affectée audit paramètre $J_{max}$, Par exemple, cette valeur est de 1,5 m/s³, respectivement 0,7 m/s³ ou 0,3 m/s³, pour représenter un mode de conduite sportif, respectivement normal ou économique. D'autres moyens configurés pour sélectionner le paramètre existent, comme, par exemple, une interaction du conducteur avec un écran tactile disponible sur un tableau de bord du véhicule.

Dans une étape 202, Acq Vc, la vitesse cible est acquise. Le vitesse cible représente la vitesse que doit atteindre le véhicule. L'acquisition de cette vitesse cible est, par exemple, réalisée par :

- Le conducteur, ou un passager du véhicule, qui renseigne la vitesse désirée à l'aide d'un bouton (+/-), d'un clavier, à l'aide d'une interface écran tactile, et/ou à l'aide d'une reconnaissance vocale...
- Un dispositif de géolocalisation associé à une cartographie. La géolocalisation déterminant la position du véhicule, le dispositif associé à une cartographie comportant une vitesse conseillée ou vitesse limite suivant la position du véhicule détermine alors la vitesse en fonction de la position et une direction du véhicule.
- D'organes aptes à détecter et à reconnaître les panneaux de signalisation présents sur la voie de circulation sur la quelle circule le véhicule.

Dans une étape 203, Acq Vi, la vitesse du véhicule est acquise par des organes classiquement présents sur ledit véhicule. Cette vitesse est dite vitesse initiale, elle est acquise à l'instant courant où on souhaite déterminer le temps de manoeuvre. Dans un autre mode opératoire, la vitesse initiale est acquise à des moments postérieurs au moment d'acquisition de la vitesse cible afin de pouvoir réactualiser la détermination d'un temps de manoeuvre du véhicule. Par exemple, un dispositif de géolocalisation associé à une cartographie est apte à déterminer, selon la direction du véhicule, une nouvelle vitesse cible plusieurs minutes à l'avance (ce dispositif identifie des distances, cependant déduire un temps à partir de la vitesse véhicule est connu).

Dans une étape 204, Det tm, le temps de manoeuvre, *tm,* pour atteindre la vitesse cible est déterminé par l'équation de la forme

$$tm = \sqrt{k \frac{|DV|}{J_{max}}}$$

où |*DV*|est la valeur absolue de la différence entre la vitesse cible et la vitesse initiale, k est une constante prédéterminé, et le paramètre $J_{max}$.

Dans un mode opératoire préféré, le paramètre prédéterminé k est égal à 6. Dans un autre mode opératoire, ce paramètre est déterminé à partir d'hypothèses sur des accélérations longitudinales du véhicule avant et après la manoeuvre, sur une modélisation polynomiale de la trajectoire longitudinale du véhicule, et que le jerk initial soit égal à $J_{max}$. Dans un autre mode opératoire, la valeur du paramètre prédéterminé k est autour de 6, par exemple entre 2 et 10, pour prendre en compte des erreurs de modélisations, des incertitudes et/ou une accentuation du typage du mode de conduite.

Le temps de manoeuvre est inversement proportionnel à l'inverse de la racine carrée du paramètre, avec les mêmes hypothèses que ci-dessus, on démontre que si le véhicule accélère de manière uniformément constante entre la vitesse initiale et la vitesse cible, alors le jerk ressenti par le conducteur est maximal au début de la manoeuvre pour atteindre la vitesse cible. Le mode de conduite du véhicule est conforme à ce qu'attend le conducteur lors de la sélection du paramètre $J_{max}$.

Dans une étape 205, Act, le temps de manoeuvre déterminé est pris en compte par une aide à la conduite. Dans un mode opératoire, si le véhicule est équipé d'un régulateur de vitesse, le régulateur accélère le véhicule dans le temps indiqué. Le conducteur ressentira alors un jerk maximum au début de la manoeuvre.

Dans un autre mode opératoire, la vitesse cible, acquise par un dispositif de géolocalisation associé à une cartographie par exemple, est représentative d'une limitation de vitesse sur un tronçon de la route. Par rapport à la position du véhicule, on détermine alors la distance où la limitation de vitesse s'applique. Suivant la distance, donc d'un temps calculé à partir de la position et vitesse courante du véhicule, la limitation est affichée au conducteur au juste nécessaire, à minima au temps de manoeuvre pour que le conducteur accélère pour atteindre la vitesse cible avec un comportement dynamique, mode de conduite, du véhicule voulu par l'intermédiaire de la sélection de paramètre $J_{max}$.

Dans un autre mode opératoire, ce temps de manoeuvre est utilisé par au moins un système d'aide à la conduite ayant un effet sur le comportement dynamique longitudinal du véhicule, et donc ayant un effet sur le mode de conduite.

La présente invention ne se limite pas aux formes de réalisation décrites ci-avant à titre d'exemples ; elle s'étend à d'autres variantes.

Ainsi, on a décrit ci-avant un exemple de réalisation dans lequel l'acquisition de la vitesse consigne est obtenue par l'intermédiaire de différents dispositifs (interface homme machine, géolocalisation associé à une cartographie, reconnaissance de panneaux de signalisation). Bien entendu, cette acquisition peut être assurée par d'autres dispositifs comme, par exemple, une communication par radiofréquence (par exemple 3G, 4G, 5G , WIFI, ...) entre véhicules (communément dit communications V2V), entre véhicule et infrastructure (communément dit communications V2I), entre véhicule vers tous (communément dit communications V2X).

Des équations et calculs ont en outre été détaillés.

## Revendications

1. Procédé de détermination d'un temps de manoeuvre d'un véhicule autonome pour atteindre une vitesse cible, ledit procédé comportant les étapes de :

   - Sélection d'un paramètre, $J_{max}$, représentant un jerk maximum que le véhicule ne doit pas dépasser en valeur absolue ;
   - Acquisition de la vitesse cible représentant une vitesse que doit atteindre le véhicule ;
   - Acquisition d'une vitesse initiale du véhicule représentant une vitesse du véhicule à l'instant courant ;
   - Détermination d'un temps de manoeuvre, $tm$, égale à

   $$tm = \sqrt{k \frac{|DV|}{J_{\max}}}$$

   où $|DV|$ est la valeur absolue de la différence entre la vitesse cible et la vitesse initiale, et $k$ est une constante prédéterminé.

2. Procédé selon la revendication 1, dans lequel l'acquisition d'une vitesse cible représentant la vitesse que doit atteindre le véhicule est obtenue à l'aide d'une interface homme-machine.

3. Procédé selon l'une des revendications précédentes, dans lequel l'acquisition d'une vitesse cible représentant la vitesse que doit atteindre le véhicule est obtenue à l'aide d'un dispositif de géolocalisation associé à une cartographie.

4. Procédé selon l'une des revendications précédentes, dans lequel l'acquisition d'une vitesse cible représentant la vitesse que doit atteindre le véhicule est obtenue à l'aide d'un dispositif de reconnaissance de panneau.

5. Procédé selon l'une des revendications précédentes, dans lequel ledit procédé comporte en outre une étape d'activation d'une fonction d'assistance de conduite en fonction du temps de manoeuvre déterminé.

6. Procédé selon la revendication 5, dans lequel la fonction d'assistance de conduite est un affichage de la vitesse cible au conducteur.

7. Procédé selon l'une des revendications 5 à 6, dans lequel la fonction d'assistance de conduite est un régulateur de vitesse

8. Dispositif (101) comprenant une mémoire (102) associée à au moins un processeur (103) configuré pour mettre en oeuvre le procédé selon l'une des revendications précédentes.

9. Véhicule comportant le dispositif selon la revendication 8.

10. Programme d'ordinateur comprenant des instructions adaptées pour l'exécution des étapes du procédé selon l'une des revendications 1 à 7 lorsque ledit programme est exécuté par au moins un processeur (103).

## Patentansprüche

1. Verfahren zur Bestimmung einer Manövrierzeit, die ein autonomes Fahrzeug benötigt, um eine Zielgeschwindigkeit zu erreichen, wobei das Verfahren die folgenden Schritte umfasst:

   - Auswahl eines Parameters $J_{max}$, der einen maximalen Ruck darstellt, den das Fahrzeug in absoluten Werten nicht überschreiten darf;
   - Erfassung der Zielgeschwindigkeit, die eine Geschwindigkeit darstellt, die das Fahrzeug erreichen muss;
   - Erfassen einer Anfangsgeschwindigkeit des Fahrzeugs, die eine Geschwindigkeit des Fahrzeugs zum aktuellen Zeitpunkt darstellt;

- Bestimmung einer Manövrierzeit, *tm* , gleich

$$tm = \sqrt{k\,\frac{|DV|}{J_{\max}}}$$

Oder |*DV*|ist der Absolutwert der Differenz zwischen der Zielgeschwindigkeit und der Anfangsgeschwindigkeit und k ist eine vorgegebene Konstante.

**2.** Verfahren nach Anspruch 1, bei dem die Erfassung einer Zielgeschwindigkeit, die die Geschwindigkeit darstellt, die das Fahrzeug erreichen muss, über eine Mensch-Maschine-Schnittstelle erfolgt.

**3.** Verfahren nach einem der vorhergehenden Ansprüche, bei dem die Erfassung einer Zielgeschwindigkeit, die die Geschwindigkeit darstellt, die das Fahrzeug erreichen muss, mithilfe eines mit einer Kartierung verbundenen Geolokalisierungsgeräts erfolgt.

**4.** Verfahren nach einem der vorhergehenden Ansprüche, bei dem die Erfassung einer Zielgeschwindigkeit, die die Geschwindigkeit darstellt, die das Fahrzeug erreichen muss, unter Verwendung einer Tafelerkennungsvorrichtung erfolgt.

**5.** Verfahren nach einem der vorhergehenden Ansprüche, wobei das Verfahren weiterhin einen Schritt des Aktivierens einer Fahrassistenzfunktion in Abhängigkeit von der ermittelten Manövrierzeit umfasst.

**6.** Verfahren nach Anspruch 5, wobei die Fahrassistenzfunktion eine Anzeige der Zielgeschwindigkeit für den Fahrer ist.

**7.** Verfahren nach einem der Ansprüche 5 bis 6, bei dem die Fahrassistenzfunktion ein Tempomat ist

**8.** Vorrichtung (101), umfassend einen Speicher (102), der mindestens einem Prozessor (103) zugeordnet ist, der zur Durchführung des Verfahrens nach einem der vorhergehenden Ansprüche konfiguriert ist.

**9.** Fahrzeug umfassend die Vorrichtung nach Anspruch 8.

**10.** Computerprogramm mit Anweisungen, die für die Ausführung der Schritte des Verfahrens nach einem der Ansprüche 1 bis 7 geeignet sind, wenn das Programm von mindestens einem Prozessor (103) ausgeführt wird.

## Claims

**1.** Method for determining a maneuvering time for an autonomous vehicle to reach a target speed, said method comprising the steps of:

- Selection of a parameter, $J_{max}$, representing a maximum jerk that the vehicle must not exceed in absolute value;
- Acquisition of the target speed representing a speed that the vehicle must reach;
- Acquisition of an initial speed of the vehicle representing a speed of the vehicle at the current time;
- Determination of a maneuvering time, *tm* , equal to
$$tm = \sqrt{k\,\frac{|DV|}{J_{\max}}}$$

Or |*DV*| is the absolute value of the difference between the target speed and the initial speed, and k is a predetermined constant.

**2.** Method according to claim 1, in which the acquisition of a target speed representing the speed that the vehicle must reach is obtained using a man-machine interface.

**3.** Method according to one of the preceding claims, in which the acquisition of a target speed representing the speed that the vehicle must reach is obtained using a geolocation device associated with mapping.

**4.** Method according to one of the preceding claims, in which the acquisition of a target speed representing the speed that the vehicle must reach is obtained using a panel recognition device.

**5.** Method according to one of the preceding claims, in which said method further comprises a step of activating a driving assistance function as a function of the determined maneuvering time.

**6.** Method according to claim 5, wherein the driving assistance function is a display of the target speed to the driver.

**7.** Method according to one of claims 5 to 6, in which the driving assistance function is a cruise control

**8.** Device (101) comprising a memory (102) associated with at least one processor (103) configured to implement the method according to one of the preceding claims.

**9.** Vehicle comprising the device according to claim 8.

**10.** Computer program comprising instructions adapted for the execution of the steps of the method according to one of claims 1 to 7 when said program is executed by at least one processor (103).

[**Fig. 1**]

[Fig. 2]

```
┌──────────────┐
│              │
│     SEL      │────┌ 201
│              │
└──────┬───────┘
       │
       ▼
┌──────────────┐
│              │
│    Acq Vc    │────┌ 202
│              │
└──────┬───────┘
       │
       ▼
┌──────────────┐
│              │
│    Acq Vi    │────┌ 203
│              │
└──────┬───────┘
       │
       ▼
┌──────────────┐
│              │
│    Det tm    │────┌ 204
│              │
└──────┬───────┘
       │
       ▼
┌──────────────┐
│              │
│     Act      │────┌ 205
│              │
└──────────────┘
```

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3147169 A2